# FASCICULE DE BREVET EUROPEEN

(11) **EP 2 649 586 B1**
(45) Date de publication et mention de la délivrance du brevet: **24.06.2015**
(21) Numéro de dépôt: 11805084.8
(22) Date de dépôt: 02.12.2011
(51) Int. Cl.: G06T 5/00, G06T 3/40

(54) **DISPOSITIF DE CORRECTION D'IMAGES RÉELLES UTILES À LA CONSTRUCTION D'UNE IMAGE DE SYNTHÈSE D'UNE ZONE ENVIRONNANT UN VÉHICULE, ET DISPOSITIF D'AIDE AU CONDUCTEUR ASSOCIÉ**
VORRICHTUNG ZUR KORREKTUR VON ECHTEN BILDERN ZUR KONSTRUKTION EINES ZUSAMMENGESETZTEN BILDES EINER ZONE UM EIN FAHRZEUG, SOWIE ZUGEHÖRIGE FAHRASSISTENZVORRICHTUNG
DEVICE FOR CORRECTING REAL IMAGES WHICH ARE USEFUL IN THE CONSTRUCTION OF A SYNTHESIS IMAGE OF A ZONE SURROUNDING A VEHICLE, AND ASSOCIATED DRIVER AID DEVICE

(30) Priorité: 06.12.2010 FR 1060124
(43) Date de publication de la demande: 16.10.2013
(73) Titulaire: Peugeot Citroën Automobiles SA, 78140 Vélizy Villacoublay (FR)
(72) Inventeur: LARGE, Frédéric, F-78180 Montigny Le Bretonneux (FR)
(86) Numéro de dépôt international: PCT/FR2011/052851
(87) Numéro de publication internationale: WO 2012/076790

(56) Documents cités:
- EP-A1- 1 383 331

## Description

L'invention concerne les véhicules, éventuellement de type terrestre, et plus précisément les dispositifs embarqués qui sont destinés à aider visuellement les conducteurs lorsqu'ils conduisent leurs véhicules.

Il existe de nombreux dispositifs destinés à aider visuellement le conducteur d'un véhicule, comme par exemple un véhicule automobile, lorsqu'il conduit, et éventuellement lorsqu'il effectue une manoeuvre. C'est notamment le cas des dispositifs de détection d'obstacles, ou des dispositifs de détection de place de stationnement adaptée à un véhicule, ou des dispositifs d'acquisition d'images de zones situées sur les côtés avant et/ou arrière d'un véhicule, ou encore des dispositifs d'aide aux manoeuvres dans un passage délicat et/ou lors d'un stationnement.

Certains des dispositifs d'aide (visuelle) précités ont pour objectif de générer des images de synthèse représentatives de la zone qui environne (et donc inclue) un véhicule à partir d'images réelles acquises successivement au moyen d'une ou plusieurs caméras, ainsi que d'éventuels moyens d'analyse par voie d'ondes, comme par exemple des détecteurs radar. Pour ce faire, ils peuvent mettre en oeuvre une méthode du type de celle qui est décrite dans le document brevet FR 09 53271. Cette méthode consiste, de façon simplifiée, à acquérir avec l'une au moins des caméras du véhicule des images successives de sa zone d'acquisition, puis à recaler ses images successives les unes par rapport aux autres en fonction des déplacements qui sont effectués par le véhicule entre ses différentes images afin de constituer progressivement une image de synthèse complète de la zone environnant le véhicule, dans une vue du dessus.

Lorsque l'on veut que les couleurs de l'image de synthèse soient fidèles à la réalité, on doit acquérir des images réelles en couleurs avec des caméras et procéder à une homogénéisation des couleurs et/ou contraste des pixels de chaque image réelle acquise avec celles/ceux des pixels de l'image de synthèse qui est en cours de construction. Un tel procédé est divulgué notamment dans le brevet EP1383331A1. Cette technique de correction d'image fonctionne assez bien lorsque la zone à afficher est bien éclairée. Mais, dès que la zone est dans la pénombre (ou au moins peu éclairée) la qualité de l'image de synthèse n'est plus bonne. Cela résulte principalement du fait que les couleurs des pixels des images réelles acquises (et utilisées pour la construction de l'image de synthèse) sont altérées (ou modifiées) par les feux de signalisation du véhicule (feux de croisement, feux de route, feux de position, feux de recul, feux de changement de direction (ou clignotants) et feux de stop).

En fait, la redondance d'information permet de construire des images de synthèse ayant des couleurs homogènes, mais pas toujours naturelles. En effet, dans un environnement sombre, le seul éclairage disponible dans une zone est celui qui est offert par les feux du véhicule. Par conséquent l'image de la zone située derrière le véhicule aura tendance à être rougie et/ou orangée (en présence des clignotants), alors que l'image de la zone située devant le véhicule aura tendance à être blanchie (ou jaunie dans le cas d'un véhicule ancien) et/ou orangée (en présence des clignotants).

L'invention a donc pour but d'améliorer le rendu visuel d'une zone environnant un véhicule et représentée par une image de synthèse.

Elle propose notamment à cet effet un dispositif, destiné à corriger des images dans un véhicule disposant d'au moins un feu et situé dans une zone dont une image de synthèse est en cours de construction à partir d'images réelles successives, et comprenant:
- des moyens de filtrage agencés (ou conçus) pour appliquer à des données d'image définissant chaque pixel d'une image réelle, acquise dans une portion de la zone, un filtre de couleur fonction de sa position dans la portion de zone et de chaque feu utilisé par le véhicule au niveau de cette portion de zone, afin de produire une image réelle filtrée, et
- des moyens d'homogénéisation agencés pour homogénéiser les couleurs et/ou le contraste des données d'image définissant les pixels d'une image réelle filtrée par rapport à celles/ceux des données d'image définissant les pixels correspondants de l'image de synthèse de la zone en cours de construction, pour produire une image réelle filtrée et homogénéisée propre à être utilisée pour construire cette image de synthèse de la zone.

Le dispositif de correction d'images selon l'invention peut comporter d'autres caractéristiques qui peuvent être prises séparément ou en combinaison, et notamment :
- ses moyens de filtrage peuvent être agencés pour appliquer aux données d'image définissant chaque pixel d'une image réelle, acquise en présence d'au moins un feu, un filtre de couleur qui est défini par des données d'une cartographie spectrale représentative de l'influence spectrale de ce(s) feu(x) sur les couleurs d'un sol;
   ➢ il peut comprendre des moyens de stockage propres à stocker les données de chaque cartographie spectrale qui est représentative de l'influence spectrale d'au moins un feu du véhicule sur les couleurs d'au moins un sol;
- ses moyens d'homogénéisation peuvent être agencés pour homogénéiser les couleurs des données d'image définissant un pixel d'une image réelle filtrée par rapport à celles des données d'image définissant le pixel correspondant et/ou des pixels voisins de ce dernier de l'image de synthèse de la zone en cours de construction;
- ses moyens d'homogénéisation peuvent être agencés pour homogénéiser les couleurs des données d'image qui définissent un pixel d'une image réelle filtrée en fonction d'un niveau d'altération spectrale qui a été introduit par le filtrage appliqué par les moyens de filtrage;
   ➢ ses moyens d'homogénéisation peuvent être agencés, lorsqu'ils disposent de pixels qui se correspondent exactement et respectivement dans deux images réelles filtrées et homogénéisées, obtenues en présence de deux combinaisons de feux différentes introduisant des niveaux d'altération spectrale différents, pour demander (à des moyens de traitement) la prise en compte dans la construction de l'image de synthèse de la zone des seuls pixels qui appartiennent à l'image réelle filtrée et homogénéisé obtenue en présence de la combinaison de feux qui introduit le niveau d'altération spectrale le plus faible;
   ➢ dans une première variante, ses moyens d'homogénéisation peuvent être agencés, lorsqu'ils disposent de pixels qui se correspondent exactement et respectivement dans deux images réelles filtrées et homogénéisées, obtenues en présence de deux combinaisons de feux différentes, pour déduire des couleurs et/ou contraste estimé(es) des couleurs et/ou contraste de ces pixels filtrés et homogénéisés correspondants, afin de produire de nouveaux pixels à couleurs et/ou contraste estimé(es), et pour demander (à des moyens de traitement) la prise en compte dans la construction de l'image de synthèse de la zone des pixels à couleurs et/ou contraste estimé(e)s à la place des pixels filtrés et homogénéisés correspondants;
   ➢ dans une seconde variante, ses moyens d'homogénéisation peuvent être agencés, lorsqu'ils disposent de pixels qui se correspondent exactement et respectivement dans deux images réelles filtrées et homogénéisées, obtenues en présence d'une combinaison de feux et en l'absence de feu, pour déduire des couleurs et/ou contraste estimé(es) des couleurs et/ou contraste de ces pixels filtrés et homogénéisés correspondants, afin de produire de nouveaux pixels à couleurs et/ou contraste estimé(es), et pour demander (à des moyens de traitement) la prise en compte dans la construction de l'image de synthèse de la zone des pixels à couleurs et/ou contraste estimé(es).

L'invention propose également un dispositif, destiné à aider le conducteur d'un véhicule, et comprenant un dispositif de correction d'images du type de celui présenté ci-avant.

Le dispositif d'aide selon l'invention peut comporter d'autres caractéristiques qui peuvent être prises séparément ou en combinaison, et notamment :
- il peut comprendre des moyens de traitement agencés pour construire l'image de synthèse de la zone environnant le véhicule en fonction de données d'image qui définissent les pixels d'images réelles et corrigées fournis par le dispositif de correction d'images;
   ➢ les moyens de traitement peuvent être agencés pour construire l'image de synthèse de la zone environnant le véhicule dans une vue du dessus (de préférence sans le véhicule);
   ➢ il peut comprendre certains au moins des moyens d'acquisition;
      - les moyens d'acquisition peuvent être choisis parmi (au moins) une caméra d'observation solidarisée à une partie arrière du véhicule, une caméra d'observation solidarisée à une partie avant du véhicule, des moyens d'analyse par voie d'ondes solidarisés à une partie arrière du véhicule, et des moyens d'analyse par voie d'ondes solidarisés à une partie avant du véhicule.

L'invention propose également un véhicule, éventuellement de type automobile, et comprenant un dispositif d'aide du type de celui présenté ci-avant.

D'autres caractéristiques et avantages de l'invention apparaîtront à l'examen de la description détaillée ci-après, et des dessins annexés, sur lesquels:
- la figure 1 illustre schématiquement et fonctionnellement, dans une vue du dessus, un exemple de véhicule automobile équipé d'un dispositif d'aide comprenant un exemple de réalisation d'un dispositif de correction d'images selon l'invention,
- les figures 2A à 2E illustrent schématiquement et respectivement cinq phases successives d'acquisition d'une image de synthèse, dans une vue du dessus, d'une zone de stationnement d'un véhicule dans un parking, ces cinq phases correspondant respectivement à cinq moments successifs d'une manoeuvre de sortie de ce véhicule hors de cette zone de stationnement, et
- la figure 3 illustre schématiquement un écran d'affichage sur lequel se trouve affichée l'image de synthèse de la zone de stationnement acquise grâce au dispositif d'aide selon l'invention.

Les dessins annexés pourront non seulement servir à compléter l'invention, mais aussi contribuer à sa définition, le cas échéant.

L'invention a notamment pour but d'offrir un dispositif (D1) destiné à corriger des images produites dans un véhicule (V).

Dans ce qui suit, on considère, à titre d'exemple non limitatif, que le véhicule (V) est de type automobile, comme par exemple une voiture, un autocar, un camion ou un véhicule utilitaire. Mais, l'invention n'est pas limitée à ce type de véhicule. Elle concerne en effet tout type de véhicule terrestre ou maritime (ou fluvial) pouvant effectuer des déplacements et des manoeuvres sur le sol ou sur l'eau.

On a schématiquement et fonctionnellement représenté sur l'unique figure un véhicule automobile de type voiture V, équipé d'un exemple de réalisation d'un dispositif de correction d'images D1 selon l'invention. Dans cet exemple non limitatif, le dispositif de correction d'images D1 fait partie d'un autre dispositif D2 embarqué dans le véhicule V et destiné à aider visuellement le conducteur lorsqu'il conduit ce véhicule V. Mais, il pourrait être externe à ce dispositif d'aide D2 tout en lui étant couplé. Par conséquent, le dispositif de correction d'images D1 peut être réalisé sous la forme de modules logiciels (ou informatiques), ou de circuits électroniques ou bien d'une combinaison de circuits électroniques et de modules logiciels. Ainsi, il pourra notamment être agencé sous la forme d'un calculateur dédié comprenant un programme dédié, ou d'un programme dédié implanté dans un calculateur existant, ou encore d'un programme intégrant d'autres fonctionnalités complémentaires et implanté dans un calculateur dédié ou existant.

La voiture V illustrée comprend classiquement une partie avant PV comportant des feux (non représentés - feux de croisement, feux de route, feux de position et feux de changement de direction (ou clignotants)) et une partie arrière PR opposée à la partie avant PV et comportant également des feux (non représentés - feux de position, feux de recul, feux de changement de direction (ou clignotants) et feux de stop).

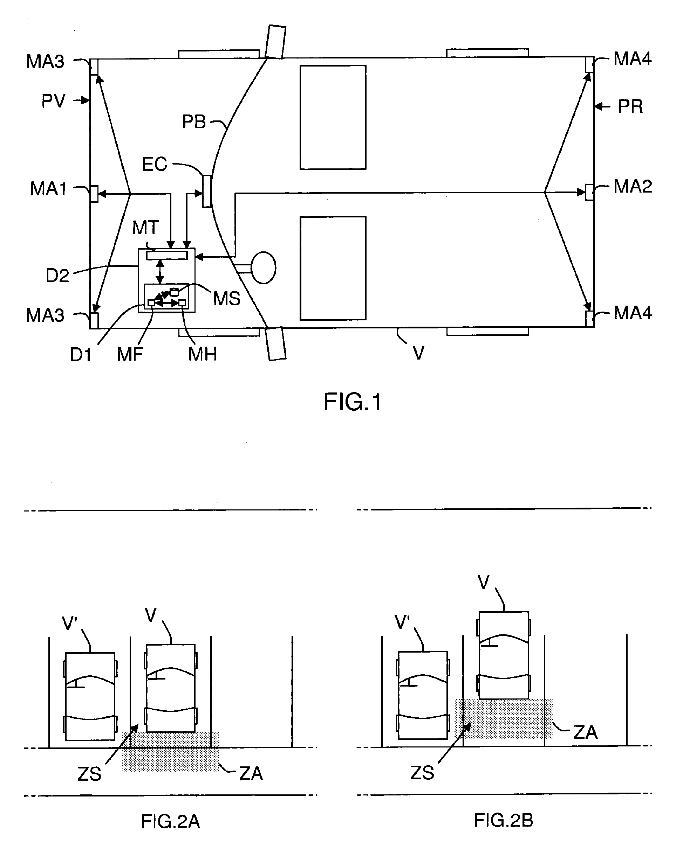

Dans l'exemple non limitatif illustré sur la figure 1, le dispositif d'aide D2 est un équipement qui ne fait pas partie de l'ordinateur de bord du véhicule V, mais qui lui est préférentiellement couplé. Mais, il pourrait faire partie de cet ordinateur de bord. Par conséquent, le dispositif d'aide D2 peut être réalisé sous la forme de circuits électroniques, ou de modules logiciels (ou informatiques), ou bien d'une combinaison de circuits électroniques et de modules logiciels. Ainsi, il pourra notamment être agencé sous la forme d'un calculateur dédié comprenant un programme dédié, ou d'un programme dédié implanté dans un calculateur existant, ou encore d'un programme intégrant d'autres fonctionnalités complémentaires et implanté dans un calculateur dédié ou existant.

Ce dispositif d'aide D2 est chargé de générer des images de synthèse IZ de la zone ZS qui environne (et donc inclue) son véhicule V. Ces images de synthèse IZ sont destinées à être affichées sur un écran EC qui est implanté dans une zone choisie du véhicule V (en visibilité directe pour le conducteur), comme par exemple dans la planche de bord PB (en position centrale), ou dans le tableau de bord, ou bien en position haute (tête haute) sur le pare-brise. On notera que cet écran EC peut éventuellement faire partie du dispositif d'aide D2.

Chaque image de synthèse (ou virtuelle) IZ est définie par des données d'image qui ont été produites par des moyens de traitement MT du dispositif d'aide D2 à partir de données acquises par des moyens d'acquisition MAi (images réelles, ainsi qu'éventuellement données d'inspection (comme par exemple des données radar)), puis stockées.

Ces moyens d'acquisition MAi comprennent au moins une caméra d'observation MA1 ou MA2 qui est solidarisée au véhicule V dans une position qui lui permet d'observer une partie au moins de son environnement immédiat, et en particulier une zone ZA qui est située derrière son pare-choc arrière ou devant son pare-choc avant. Chaque caméra (d'observation) MA1 ou MA2 fournie des images réelles qui sont préalablement corrigées par le dispositif de correction d'images D1. Il est important de noter qu'une image de synthèse IZ peut être produite à partir d'images réelles acquises par plusieurs (au moins deux) caméras éventuellement à des instants décalés temporellement.

Dans l'exemple non limitatif illustré sur la figure 1, les moyens d'acquisition MAi comprennent deux caméras d'observation MA1 et MA2 implantées en position centrale respectivement à l'avant et à l'arrière du véhicule V (par exemple dans les pare-chocs ou boucliers), ainsi que des moyens d'analyse par voie d'ondes MA3 et MA4, comme par exemple des détecteurs radar, implantés respectivement à l'avant et à l'arrière du véhicule V (par exemple dans les pare-chocs ou boucliers) dans des positions qui leur permettent de détecter des obstacles dans leur environnement immédiat. Il est rappelé que des moyens d'analyse par voie d'ondes fournissent des données d'inspection à partir desquelles on peut générer une cartographie 2D, 2,5D ou 3D de l'environnement immédiat extérieur au véhicule V.

Il est important de noter que l'un au moins des moyens d'acquisition MAi peut faire éventuellement partie du dispositif d'aide D2. Par conséquent, l'un au moins des moyens d'acquisition MAi peut être éventuellement un équipement qui assure au moins une autre fonction au sein du véhicule V. Dans ce dernier cas, les données acquises par l'équipement doivent être récupérées soit auprès de ce dernier, soit sur le bus informatique du véhicule V, soit auprès de l'ordinateur de bord du véhicule V.

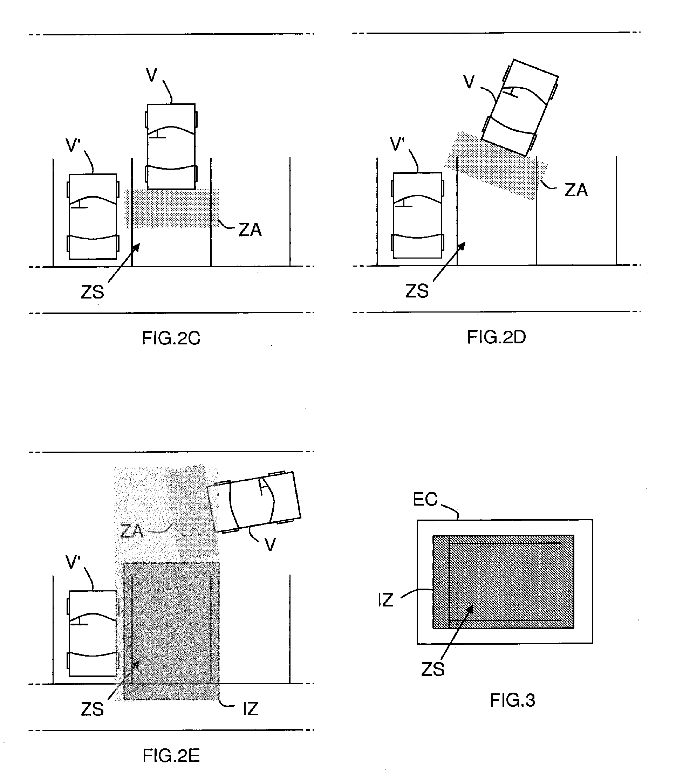

On considère dans ce qui suit, à titre d'exemple non limitatif, que le dispositif d'aide D2 est destiné à aider le conducteur à effectuer des manoeuvres, par exemple (et comme illustré sur les figures 2A à 2E) lors d'une phase de stationnement (arrivée ou départ). Par conséquent, chaque image de synthèse IZ, produite par le dispositif d'aide D2 et affichée sur l'écran EC (voir figure 3), est représentative d'une zone de stationnement ZS. Bien entendu, le dispositif d'aide D2 pourrait être utilisé pour produire des images de synthèse d'autres types de zone environnant un véhicule, dès lors que ce sont des zones qui sont parcourues à basse vitesse (par exemple inférieure à environ 20 km/h) et qui nécessitent d'effectuer une manoeuvre (même minime) (passage étroit, parking fermé, rampe d'accès et analogues).

Pour générer les données d'image définissant une image de synthèse IZ d'une zone de stationnement ZS à partir des données d'image définissant une image réelle acquise au moyen d'une caméra MA1 ou MA2, on peut, par exemple, utiliser la méthode qui est décrite dans le document brevet FR 09 53271, dont le contenu technique est ici incorporé par référence. Cette méthode est très schématiquement illustrée sur les figures 2A à 2E. Elle consiste, de façon simplifiée, à acquérir avec l'une au moins des caméras MA1 et MA2 du véhicule V des images réelles successives de sa zone d'acquisition ZA, puis à corriger ces images réelles successives avec le dispositif de correction d'images D1, puis à recaler ces images réelles corrigées et successives les unes par rapport aux autres en fonction des déplacements effectués par le véhicule V entre ses différentes images afin de constituer progressivement une image de synthèse complète IZ de la zone de stationnement ZS du véhicule V dans une vue du dessus.

Dans l'exemple non limitatif illustré sur les figures 2A à 2E, on n'utilise de façon simplifiée que la caméra arrière MA2 du véhicule V pour constituer progressivement l'image de synthèse complète IZ de la zone de stationnement ZS du véhicule V dans une vue du dessus. Cette caméra arrière MA2 acquiert périodiquement une image réelle d'une zone d'acquisition ZA située derrière le véhicule V, et les données d'image définissant chaque image réelle sont stockées temporairement afin de pouvoir être corrigées et recalées les unes par rapport aux autres au fur et à mesure de leur acquisition. Lorsque le véhicule V a (ici) totalement quitté sa zone de stationnement ZS (figure 2E), on dispose d'une image de synthèse complète IZ de cette dernière (ZS). On notera que cette acquisition pourrait tout aussi bien se faire lorsque le véhicule V arrive dans la zone de stationnement ZS.

Comme illustré sur les figures 2E et 3, l'image de synthèse complète IZ peut représenter, dans une vue du dessus, une zone (de stationnement) ZS sans le véhicule V.

On notera que le début de l'acquisition des images réelles permettant de construire une image de synthèse complète IZ, peut être décidé chaque fois que le conducteur desserre le frein de parking du véhicule V. Dans une variante, le début de l'acquisition peut être décidé chaque fois que le véhicule V se met en marche après avoir été immobilisé pendant une certaine durée prédéfinie, éventuellement moteur coupé. La position et l'éventuelle orientation du véhicule V au début de l'acquisition défini(ssen)t l'origine du repère associé à la zone (de stationnement) ZS et, de préférence, les limites de cette dernière (ZS).

On notera également que l'image de synthèse complète IZ peut être affichée à la demande expresse du conducteur ou bien automatiquement, pare exemple sur enclenchement de la marche arrière. Mais, la production de l'image de synthèse complète IZ est de préférence systématique (sauf si le conducteur a décidé de désactiver complètement la fonction), dès lors que la vitesse du véhicule devient inférieure à une vitesse choisie à l'avance, par exemple inférieure à environ 20 km/h.

On notera également que la fin de l'acquisition des images réelles peut être déclenchée lorsque l'on a construit une image de synthèse complète IZ qui correspond aux limites de la zone de stationnement ZS déterminées au début de l'acquisition. Dans une variante, la fin de l'acquisition peut être décidée lorsque le véhicule V s'est éloigné d'une distance prédéfinie de son point de départ dans la zone de stationnement ZS (c'est-à-dire par rapport à l'origine du repère).

Comme illustré sur la figure 1, le dispositif de correction d'images D1 comprend au moins des moyens de filtrage MF et des moyens d'homogénéisation MH.

Les moyens de filtrage MF sont agencés pour appliquer aux données d'image qui définissent chaque pixel d'une image réelle, acquise dans une portion de la zone ZS (par exemple par la caméra MA1 et/ou la caméra MA2), un filtre de couleur qui est fonction de sa position dans cette portion de zone et du/des feu(x) utilisé(s) par le véhicule V au niveau de cette portion de zone, afin de produire une image réelle filtrée.

On comprendra que chaque filtre de couleur a été préalablement déterminé pour annuler autant que possible l'influence qu'à une combinaison d'au moins un type de feu sur l'image réelle qui est acquise par une caméra MA1 ou MA2 dans sa zone d'acquisition ZA et sur un type de sol donné. En d'autres termes, chaque filtre de couleur, appliqué à un pixel d'une image réelle d'une zone acquisition ZA, a pour but d'annuler au moins partiellement l'influence connue d'une combinaison de feux sur ce pixel.

Par exemple, chaque filtre peut être défini par des données d'une cartographie spectrale qui représente l'influence spectrale d'une combinaison de feux sur les couleurs acquises d'un sol. De telles cartographies spectrales peuvent être obtenues en laboratoire (ou en usine) lors de tests.

Par exemple, et comme illustré non limitativement, le dispositif de correction d'images D1 peut comprendre des moyens de stockage MS propres à stocker les données définissant chaque cartographie spectrale représentative de l'influence spectrale d'une combinaison d'au moins un feu du véhicule V sur les couleurs d'au moins un sol. Dans ce cas, chaque fois que les moyens de filtrage MF reçoivent les données d'image définissant une image réelle, ils accèdent aux moyens de stockage MS pour extraire la cartographie spectrale qui correspond à la combinaison de feux qui était active dans la zone d'acquisition ZA au moment de l'acquisition de cette image réelle, puis ils appliquent cette cartographie aux différents pixels qui constituent cette image réelle afin de produire une image réelle filtrée.

Tout type de moyens de stockage MS connu de l'homme de l'art peut être utilisé, et notamment une mémoire (éventuellement de type logiciel).

Les moyens d'homogénéisation MH, du dispositif de correction d'images D1, sont agencés pour homogénéiser les couleurs et/ou le contraste de l'ensemble des données d'image qui définissent les pixels d'une image réelle filtrée par rapport aux couleurs et/ou au contraste des données d'image qui définissent les pixels correspondants de l'image de synthèse de la zone IZ qui est en cours de construction et qui est fournie par les moyens de traitement MT du dispositif d'aide D2. Cette homogénéisation est destinée à produire une image réelle filtrée et homogénéisée qui peut alors être utilisée par les moyens de traitement MT du dispositif d'aide D2 pour construire progressivement l'image de synthèse de la zone IZ.

On entend ici par "homogénéiser" le fait de modifier les couleurs et/ou le contraste d'un pixel d'une image réelle filtrée afin qu'elles/qu'il(s) devienne(nt) sensiblement identiques à celles/ceux d'au moins un pixel correspondant (en terme de position) dans l'image de synthèse IZ en cours de construction. Il est important de noter qu'une image de référence n'est pas forcément une image reconstruite. En effet, dans certaines configurations, l'image en cours (ou actuelle) peut servir d'image de référence (c'est par exemple le cas si l'image en cours est prise par une caméra située à l'avant du véhicule et donc qui acquiert des images d'une zone éclairée par des blocs optiques offrant un éclairage blanc qui altère peu les couleurs).

De préférence, l'homogénéisation des couleurs et/ou du contraste des d'un pixel d'une image réelle filtrée se fait par rapport à celles/ceux du pixel qui lui correspond exactement au sein de l'image de synthèse de la zone IZ en cours de construction (si il existe) et/ou des pixels qui sont voisins de ce dernier pixel dans l'image de synthèse de la zone IZ en cours de construction.

On notera que les moyens d'homogénéisation MH peuvent mettre en oeuvre plusieurs techniques d'homogénéisation. Ainsi, ils peuvent, par exemple, homogénéiser les couleurs des données d'image définissant un pixel d'une image réelle filtrée en fonction du niveau d'altération spectrale qui a été introduit par le filtrage appliqué juste avant par les moyens de filtrage MF.

On entend ici par "niveau d'altération spectrale" un niveau qui quantifie la taille de la partie du spectre visible qui est supprimée par un filtre de couleur.

On notera que l'on peut atténuer l'effet de cette altération spectrale, en effectuant une ou plusieurs levées d'ambiguïtés de types différents. Pour ce faire, il faut, par exemple, que les moyens d'homogénéisation MH puissent disposer de pixels qui se correspondent sensiblement et respectivement dans deux images réelles filtrées et homogénéisées, obtenues en présence de deux combinaisons de feux différentes introduisant des niveaux d'altération spectrale différents, par exemple par les caméras avant MA1 et arrière MA2. On notera que dans la pratique chaque pixel est analysé par rapport aux pixels voisins pour compenser un éventuel bruit et/ou d'éventuelles erreurs de calibration qui ne permettraient pas de faire correspondre exactement deux pixels. On notera également que l'une des deux images réelles filtrées et homogénéisées a déjà été utilisée par les moyens de traitement MT. Par conséquent, les moyens d'homogénéisation MH peuvent demander aux moyens de traitement MT de ne prendre en compte dans la construction de l'image de synthèse de la zone IZ que les pixels qui appartiennent à l'image réelle filtrée et homogénéisée qui a été obtenue en présence de la combinaison de feux qui introduit le niveau d'altération spectrale le plus faible. C'est en effet l'image corrigée qui présente le moins d'altération spectrale et donc qui offre le rendu visuel qui est le plus proche de la réalité (c'est-à-dire en présence d'une lumière naturelle ou équivalente). On comprendra que cela peut éventuellement nécessiter de stocker toutes les images réelles filtrées et homogénéisées d'une séquence. Mais, on peut également ne conserver que la dernière image reconstruite et ayant fait l'objet d'une homogénéisation et d'un filtrage. En outre, cela peut nécessiter que les moyens de traitement MT reconstruisent au moins partiellement l'image de synthèse en cours de construction, puisque l'une des deux images réelles filtrées et homogénéisées avait déjà été prise en compte.

Dans une première variante, les moyens d'homogénéisation MH peuvent déduire des couleurs et/ou un contraste estimé(es) des couleurs et/ou du contraste des pixels filtrés et homogénéisés qui se correspondent dans les deux images réelles filtrées et homogénéisées. On peut en effet déduire de deux images réelles filtrées avec deux filtres différents des informations complémentaires qui vont permettre de mieux estimer les couleurs réelles et/ou le contraste réel (c'est-à-dire en présence d'une lumière naturelle ou équivalente).

Ensuite, les moyens d'homogénéisation MH peuvent produire de nouveaux pixels ayant ces couleurs et/ou ce contraste estimé(es), puis demander aux moyens de traitement MT de prendre en compte dans la construction de l'image de synthèse de la zone IZ les pixels dont ils viennent d'estimer les couleurs et/ou le contraste, à la place des pixels filtrés et homogénéisés correspondants. On comprendra que cela peut éventuellement nécessiter de stocker toutes les images réelles filtrées et homogénéisées d'une séquence. Mais, on peut également ne conserver que la dernière image reconstruite et ayant fait l'objet d'une homogénéisation et d'un filtrage. En outre, cela peut nécessiter que les moyens de traitement MT reconstruisent au moins partiellement l'image de synthèse en cours de construction, puisque l'une des deux images réelles filtrées et homogénéisées avait déjà été prise en compte.

On peut également envisager une seconde variante dans laquelle les deux images réelles filtrées et homogénéisées ont été obtenues respectivement en présence d'une combinaison de feux et en l'absence de feu. Cela nécessite par exemple de programmer au moins certains feux du véhicule V pour qu'ils cessent momentanément, par exemple pendant une fraction de seconde, de fonctionner de sorte que les moyens d'acquisition MAi puissent acquérir une première image réelle en présence d'une combinaison de feux puis immédiatement après une seconde image réelle en l'absence de feu (fonction d'éclairage piloté).

Dans cette seconde variante, les moyens d'homogénéisation MH peuvent déduire des couleurs et/ou un contraste estimé(es) des couleurs et/ou contraste de ces pixels filtrés correspondants. Ensuite, les moyens d'homogénéisation MH peuvent produire de nouveaux pixels ayant ces couleurs et/ou ce contraste estimé(es), puis demander aux moyens de traitement MT de prendre en compte dans la construction de l'image de synthèse de la zone IZ les pixels dont ils viennent d'estimer les couleurs et/ou le contraste.

On peut également envisager que les moyens d'homogénéisation MH disposent de données d'inspection obtenues avec des moyens d'analyse par voie d'ondes MA3 et/ou MA4 du véhicule V et représentatives d'obstacle(s) situées dans la zone IZ. Dans ce cas, il est préférable que les moyens d'homogénéisation MH ne corrigent que les pixels des images réelles dans lesquels l'obstacle détecté n'est pas présent, de manière à éviter de faire disparaître ce dernier de l'image réelle filtrée et homogénéisée, et donc éventuellement de l'image de synthèse complète IZ. Cette fonctionnalité est donc plutôt destinée à corriger l'image de la zone libre du sol qui est située autour du véhicule.

On notera qu'une image de synthèse complète IZ se construit progressivement à partir d'images successives et que l'on peut considérer qu'elle est effectivement complète une fois que le véhicule est arrêté (ou qu'une manoeuvre est terminée). Cependant, dès que l'on dispose d'une image réelle, on peut la traiter (par filtrage(s) et homogénéisation(s)) afin de produire une image de synthèse "partielle" que l'on peut afficher sur l'écran EC et qui sera complétée par l'image réelle traitée suivante.

L'invention permet donc d'afficher sur l'écran EC du véhicule V une image de synthèse IZ, partielle ou complète, représentative d'une partie au moins de la zone qui environne ce véhicule V, comme si cette dernière (IZ) avait été produite de jour ou au moins sous un éclairage comparable à la lumière du jour.

L'invention ne se limite pas aux modes de réalisation de dispositif de correction d'images, de dispositif d'aide et de véhicule décrits ci-avant, seulement à titre d'exemple, mais elle englobe toutes les variantes que pourra envisager l'homme de l'art dans le cadre des revendications ci-après.

## Revendications

1. Dispositif de correction d'images (D1) pour un véhicule (V) disposant d'au moins un feu et situé dans une zone dont une image de synthèse est en cours de construction à partir d'images réelles successives, **caractérisé en ce qu'**il comprend i) des moyens de filtrage (MF) agencés pour appliquer à des données d'image définissant chaque pixel d'une image réelle, acquise dans une portion de ladite zone, un filtre de couleur fonction de sa position dans ladite portion et de chaque feu utilisé par ledit véhicule (V) au niveau de ladite portion, afin de produire une image réelle filtrée, et ii) des moyens d'homogénéisation (MH) agencés pour homogénéiser les couleurs et/ou le contraste des données d'image définissant les pixels d'une image réelle filtrée par rapport à celles/ceux des données d'image définissant les pixels correspondants de ladite image de synthèse de la zone en cours de construction, pour produire une image réelle filtrée et homogénéisée propre à être utilisée pour construire ladite image de synthèse de la zone.

2. Dispositif selon la revendication 1, **caractérisé en ce que** lesdits moyens de filtrage (MF) sont agencés pour appliquer aux données d'image définissant chaque pixel d'une image réelle, acquise en présence d'au moins un feu, un filtre de couleur défini par des données d'une cartographie spectrale représentative de l'influence spectrale dudit feu sur les couleurs d'un sol.

3. Dispositif selon la revendication 2, **caractérisé en ce qu'**il comprend des moyens de stockage (MS) propres à stocker lesdites données de chaque cartographie spectrale représentative de l'influence spectrale d'au moins un feu dudit véhicule (V) sur les couleurs d'au moins un sol.

4. Dispositif selon l'une des revendications 1 à 3, **caractérisé en ce que** lesdits moyens d'homogénéisation (MH) sont agencés pour homogénéiser les couleurs des données d'image définissant un pixel d'une image réelle filtrée par rapport à celles des données d'image définissant le pixel correspondant et/ou des pixels voisins de ce dernier de ladite image de synthèse de la zone en cours de construction.

5. Dispositif selon l'une des revendications 1 à 4, **caractérisé en ce que** lesdits moyens d'homogénéisation (MH) sont agencés pour homogénéiser les couleurs des données d'image définissant un pixel d'une image réelle filtrée en fonction d'un niveau d'altération spectrale introduit par le filtrage appliqué par lesdits moyens de filtrage (MF).

6. Dispositif selon la revendication 5, **caractérisé en ce que** lesdits moyens d'homogénéisation (MH) sont agencés, lorsqu'ils disposent de pixels qui se correspondent exactement et respectivement dans deux images réelles filtrées et homogénéisées, obtenues en présence de deux combinaisons de feux différentes introduisant des niveaux d'altération spectrale différents, pour demander la prise en compte dans la construction de ladite image de synthèse de la zone des seuls pixels appartenant à l'image réelle filtrée et homogénéisée obtenue en présence de la combinaison de feux introduisant le niveau d'altération spectrale le plus faible.

7. Dispositif selon la revendication 5, **caractérisé en ce que** lesdits moyens d'homogénéisation (MH) sont agencés, lorsqu'ils disposent de pixels qui se correspondent exactement et respectivement dans deux images réelles filtrées et homogénéisées, obtenues en présence de deux combinaisons de feux différentes, pour déduire des couleurs et/ou contraste estimé(es) des couleurs et/ou contraste de ces pixels filtrés et homogénéisés correspondants, afin de produire de nouveaux pixels à couleurs et/ou contraste estimé(es), et pour demander la prise en compte dans la construction de ladite image de synthèse de la zone desdits pixels à couleurs et/ou contraste estimé(es) à la place desdits pixels filtrés et homogénéisés correspondants.

8. Dispositif selon la revendication 5, **caractérisé en ce que** lesdits moyens d'homogénéisation (MH) sont agencés, lorsqu'ils disposent de pixels qui se correspondent exactement et respectivement dans deux images réelles filtrées et homogénéisées, obtenues en présence d'une combinaison de feux et en l'absence de feu, pour déduire des couleurs et/ou contraste estimé(es) des couleurs et/ou contraste de ces pixels filtrés et homogénéisés correspondants, afin de produire de nouveaux pixels à couleurs et/ou contraste estimé(es), et pour demander la prise en compte dans la construction de ladite image de synthèse de la zone desdits pixels à couleurs et/ou contraste estimé(es).

9. Dispositif d'aide (D2) pour un conducteur d'un véhicule (V) situé dans une zone, **caractérisé en ce qu'**il comprend un dispositif de correction d'images (D1) selon l'une des revendications précédentes.

10. Dispositif selon la revendication 9, **caractérisé en ce qu'**il comprend des moyens de traitement (MT) agencés pour construire ladite image de synthèse de la zone environnant ledit véhicule (V) en fonction de données d'image définissant les pixels d'images réelles et corrigées fournis par le dispositif de correction d'images (D1).

11. Dispositif selon la revendication 10, **caractérisé en ce que** lesdits moyens de traitement (MT) sont agencés pour construire ladite image de synthèse de la zone environnant ledit véhicule (V) dans une vue du dessus.

12. Dispositif selon l'une des revendications 10 et 11, **caractérisé en ce qu'**il comprend certains au moins desdits moyens d'acquisition (MAi).

13. Dispositif selon la revendication 12, **caractérisé en ce que** lesdits moyens d'acquisition (MAi) sont choisis dans un groupe comprenant au moins une caméra d'observation solidarisée à une partie arrière dudit véhicule (V), une caméra d'observation solidarisée à une partie avant dudit véhicule (V), des moyens d'analyse par voie d'ondes solidarisés à une partie arrière dudit véhicule (V), et des moyens d'analyse par voie d'ondes solidarisés à une partie avant dudit véhicule (V).

14. Véhicule (V), **caractérisé en ce qu'**il comprend un dispositif d'aide (D2) selon l'une des revendications 9 à 13.

15. Véhicule selon la revendication 14, **caractérisé en ce qu'**il est de type automobile.

## Patentansprüche

1. Vorrichtung zur Korrektur von Bildern (D1) für ein Fahrzeug (V), umfassend mindestens ein Licht und angeordnet in einem Bereich, von dem sich ein Synthesebild ausgehend von aufeinander folgenden reellen Bildern in Konstruktion befindet, **dadurch gekennzeichnet, dass** sie i) Filtermittel (MF) umfasst, die angeordnet sind, um auf Bilddaten, die jedes Pixel eines reellen Bildes definieren, erfasst in einem Abschnitt des Bereichs, einen Farbfilter je nach seiner Position in dem Abschnitt und jedem Licht, das von dem Fahrzeug (V) auf der Ebene des Abschnitts verwendet wird, anzuwenden, um ein gefiltertes reelles Bild zu erzeugen, und ii) Homogenisierungsmittel (MH), die angeordnet sind, um die Farben und/oder den Kontrast der Bilddaten zu homogenisieren, die die Pixel eines gefilterten reellen Bildes mit Bezug auf diejenigen der Bilddaten definieren, die die entsprechenden Pixel des Synthesebilds des Bereichs definieren, der sich in Konstruktion befindet, um ein gefiltertes und homogenisiertes reelles Bild zu erzeugen, das geeignet ist, um für die Konstruktion des Synthesebilds des Bereichs verwendet zu werden.

2. Vorrichtung nach Anspruch 1, **dadurch gekennzeichnet, dass** die Filtermittel (MF) angeordnet sind, um auf die Bilddaten, die jedes Pixel eines reellen Bildes definieren, erfasst in Anwesenheit von mindestens einem Licht, einen Farbfilter anzuwenden, der von Daten eines Spektralmappings definiert ist, das den spektralen Einfluss des Lichts auf die Farben eines Bodens darstellt.

3. Vorrichtung nach Anspruch 2, **dadurch gekennzeichnet, dass** sie Speichermittel (MS) umfasst, die geeignet sind, um die Daten jedes Spektralmappings zu speichern, das den spektralen Einfluss mindestens eines Lichts des Fahrzeugs (V) auf die Farben mindestens eines Bodens darstellt.

4. Vorrichtung nach einem der Ansprüche 1 bis 3, **dadurch gekennzeichnet, dass** die Homogenisierungsmittel (MH) angeordnet sind, um die Farben der Bilddaten zu homogenisieren, die ein Pixel eines gefilterten reellen Bildes mit Bezug auf diejenigen der Bilddaten definieren, die das entsprechende Pixel und/oder benachbarte Pixel dieses Letzteren des Synthesebildes des Bereichs definieren, das sich in Konstruktion befindet.

5. Vorrichtung nach einem der Ansprüche 1 bis 4, **dadurch gekennzeichnet, dass** die Homogenisierungsmittel (MH) angeordnet sind, um die Farben der Bilddaten zu homogenisieren, die ein Pixel eines gefilterten reellen Bildes je nach einem Niveau der spektralen Veränderung definieren, eingeführt durch die Filterung, die von den Filtermitteln (MF) angewendet wurde.

6. Vorrichtung nach Anspruch 5, **dadurch gekennzeichnet, dass** die Homogenisierungsmittel (MH) angeordnet sind, wenn sie über Pixel verfügen, die sich exakt und jeweils in zwei gefilterten und homogenisierten reellen Bildern entsprechen, erhalten in Anwesenheit von zwei verschiedenen Kombinationen von Lichtern, die verschiedene Niveaus der spektralen Veränderung einführen, um bei der Konstruktion des Synthesebildes des Bereichs nur die Berücksichtigung der Pixel anzufordern, die zu dem gefilterten und homogenisierten reellen Bild gehören, erhalten in Anwesenheit der Kombination von Lichtern, die das niedrigste Niveau der spektralen Veränderung einführt.

7. Vorrichtung nach Anspruch 5, **dadurch gekennzeichnet, dass** die Homogenisierungsmittel (MH) angeordnet sind, wenn sie über Pixel verfügen, die sich exakt und jeweils in zwei gefilterten und homogenisierten reellen Bildern entsprechen, erhalten in Anwesenheit von zwei verschiedenen Kombinationen von Lichtern, um geschätzte Farben und/oder einen geschätzten Kontrast von den Farben und/oder dem Kontrast der entsprechende gefilterten und homogenisierten Pixel abzuleiten, um neue Pixel mit geschätzten Farben und/oder einem geschätzten Kontrast zu erzeugen, und um bei der Konstruktion die Berücksichtigung des Synthesebildes des Bereichs der Pixel mit geschätzten Farben und/oder einem geschätzten Kontrast anstelle der entsprechenden gefilterten und homogenisierten Pixel anzufordern.

8. Vorrichtung nach Anspruch 5, **dadurch gekennzeichnet, dass** die Homogenisierungsmittel (MH) angeordnet sind, wenn sie über Pixel verfügen, die sich exakt und jeweils in zwei gefilterten und homogenisierten reellen Bildern entsprechen, erhalten in Anwesenheit einer Kombinationen von Lichtern und in Abwesenheit von Licht, um geschätzte Farben und/oder einen geschätzten Kontrast von den Farben und/oder dem Kontrast dieser entsprechenden gefilterten und homogenisierten Pixel abzuleiten, um neue Pixel mit geschätzten Farben und/oder einem geschätzten Kontrast zu erzeugen, und um bei der Konstruktion des Synthesebildes die Berücksichtigung des Bereichs der Pixel mit geschätzten Farben und/oder einem geschätzten Kontrast anzufordern.

9. Hilfsvorrichtung (D2) für einen Fahrer eines Fahrzeugs (V), angeordnet in einem Bereich, **dadurch gekennzeichnet, dass** sie eine Vorrichtung zur Korrektur von Bildern (D1) nach einem der vorhergehenden Ansprüche umfasst.

10. Vorrichtung nach Anspruch 9, **dadurch gekennzeichnet, dass** sie Verarbeitungsmittel (MT) umfasst, die angeordnet sind, um das Synthesebild des Bereichs, der das Fahrzeug (V) umgibt, je nach Bilddateien zu konstruieren, die die Pixel von reellen und korrigierten Bildern definieren, die von einer Vorrichtung zur Korrektur von Bildern (D1) geliefert werden.

11. Vorrichtung nach Anspruch 10, **dadurch gekennzeichnet, dass** die Verarbeitungsmittel (MT) angeordnet sind, um das Synthesebild des Bereichs, der das Fahrzeug (V) umgibt, in einer Ansicht von oben zu konstruieren.

12. Vorrichtung nach einem der Ansprüche 10 und 11, **dadurch gekennzeichnet, dass** sie mindestens bestimmte der Erfassungsmittel (MAi) umfasst.

13. Vorrichtung nach Anspruch 12, **dadurch gekennzeichnet, dass** die Erfassungsmittel (MAi) ausgewählt sind aus einer Gruppe umfassend mindestens eine Beobachtungskamera, die mit einem hinteren Teil des Fahrzeugs (V) fest verbunden ist, eine Beobachtungskamera, die mit einem vorderen Teil des Fahrzeugs (V) fest verbunden ist, Mittel zur Analyse mit Hilfe von Wellen, die mit einem hinteren Teil des Fahrzeugs (V) fest verbunden sind, und Mittel zur Analyse mit Hilfe von Wellen, die mit einem vorderen Teil des Fahrzeugs (V) fest verbunden sind.

14. Fahrzeug (V), **dadurch gekennzeichnet, dass** es eine Hilfsvorrichtung (D2) nach einem der Ansprüche 9 bis 13 umfasst.

15. Fahrzeug (V) nach Anspruch 14, **dadurch gekennzeichnet, dass** es vom Typ Kraftfahrzeug ist.

## Claims

1. Device for correcting images (D1) for a vehicle (V) having at least one light and located in an area, a synthetic image of which is being constructed from successive real images, **characterised in that** it comprises i) filtering means (MF) laid out for applying to image data defining each pixel of a real image, acquired in a portion of said area, a colour filter depending on its position in said portion and on each light used by said vehicle (V) at said portion, in order to produce a filtered real image, and ii) homogenisation means (MH) laid out for homogenising the colours and/or the contrast of the image data defining the pixels of a filtered real image relatively to those of image data defining the corresponding pixels of said synthetic image of the area being constructed, for producing a filtered and homogenised real image, able to be used for constructing said synthetic image of the area.

2. Device according to claim 1, **characterised in that** said filtering means (MF) are laid out for applying to the image data defining each pixel of a real image, acquired in the presence of at least one light, a colour filter defined by data of a spectral mapping representative of the spectral influence of said light on the colours of a ground.

3. Device according to claim 2, **characterised in that** it comprises storage means (MS) able to store said data of each spectral mapping representative of the spectral influence of at least one light of said vehicle (V) on the colours of at least one ground.

4. Device according to one of claims 1 to 3, **characterised in that** the homogenisation means (MH) are laid out for homogenising the colours of the image data defining the corresponding pixel and/or neighbouring pixels of the latter of said synthetic image of the area being constructed.

5. Device according to one of claims 1 to 4, **characterised in that** said homogenisation means (MH) are laid out for homogenising the colours of the image data defining a pixel of a filtered real image depending on a spectral alteration level introduced by the filtering applied by said filtering means (MF).

6. Device according to claim 5, **characterised in that** said homogenisation means (MH) are laid out, when they have pixels which exactly and respectively correspond in two filtered and homogenised real images, obtained in the presence of two different combinations of lights introducing different spectral alteration levels, in order to request the taking into account in the construction of said synthetic image of the area of the sole pixels belonging to the filtered and homogenised real image obtained in the presence of the combination of lights introducing the smallest spectral alteration level.

7. Device according to claim 5, **characterised in that** said homogenisation means (MH) are laid out, when they have pixels which exactly and respectively correspond in two filtered and homogenised real images, obtained in the presence of two different combinations of lights, in order to infer estimated colours and/or contrast from the colours and/or contrast of these corresponding filtered and homogenised pixels, in order to produce new pixels with estimated colours and/or contrast and to request the taking into account in the construction of said synthetic image of the area of said pixels with estimated colours and/or contrast instead of said corresponding filtered and homogenised pixels.

8. Device according to claim 5, **characterised in that** said homogenisation means (MH) are laid out, when they have pixels which exactly and respectively correspond in two filtered and homogenised real images, obtained in the presence of a combination of lights and in the absence of a light, in order to infer from the estimated colours and/or contrast colours and/or contrast of these corresponding filtered and homogenised pixels, in order to produce new pixels with estimated colours and/or contrast, and to request the taking into account in the construction of said synthetic image of the area, of said pixels with estimated colours and/or contrast.

9. Device (D2) for assisting a driver of a vehicle (V) located in an area, **characterised in that** it comprises a device for correcting images (D1) according to one of the preceding claims.

10. Device according to claim 9, **characterised in that** it comprises processing means (MT) laid out for constructing said synthetic image of the area surrounding said vehicle (V) according to image data defining the pixels of real and corrected images provided by the image correction device (D1).

11. Device according to claim 10, **characterised in that** said processing means (MT) are laid out for constructing said synthetic image of the area surrounding said vehicle (V) in a top view.

12. Device according to one of claims 10 and 11, **characterised in that** it comprises at least certain of said acquisition means (MAi).

13. Device according to claim 12, **characterised in that** said acquisition means (MAi) are selected from a group comprising at least one observation camera secured to a rear portion of said vehicle (V), one observation camera secured to a front portion of said vehicle (V), means for analysis via waves secured to a rear portion of said vehicle (V), and means for analysis via waves secured to a front portion of said vehicle (V).

14. Vehicle (V), **characterised in that** it comprises an assistance device (D2) according to one of claims 9 to 13.

15. Vehicle according to claim 14, **characterised in that** it is of the automobile type.
